# EUROPÄISCHE PATENTSCHRIFT

(11) **EP 1 454 520 B1**
(45) Veröffentlichungstag und Bekanntmachung des Hinweises auf die Patenterteilung: **19.11.2008**
(21) Anmeldenummer: 04100820.2
(22) Anmeldetag: 02.03.2004
(51) Int. Cl.: A01D 43/08

(54) **Austrageinrichtung einer landwirtschaftlichen Erntemaschine**
Discharging device of an agricultural harvesting machine
Dispositif de décharge d'une récolteuse agricole

(30) Priorität: 06.03.2003 DE 10309700
(43) Veröffentlichungstag der Anmeldung: 08.09.2004
(73) Patentinhaber: DEERE & COMPANY, Moline, Illinois 61265-8098 (US)
(72) Erfinder: Vogelgesang, Claus Josef, 66399, Mandelbachtal (DE); Schäfer, Peter, 66265, Heusweiler/Obersalbach (DE)
(74) Vertreter: Holst, Sönke

(56) Entgegenhaltungen:
- EP-A- 0 760 202
- EP-A- 1 151 652
- EP-A- 1 250 832
- EP-A- 1 393 613
- EP-A- 1 405 555

## Beschreibung

### Beschreibung für folgende(n) Vertragsstaat(en): AT, BG, CH, CY, CZ, DK, EE, ES, FI, GR, HU, IE, IT, LI, LU, MC, NL, PL, PT, RO, SE, SI, SK, TR

Die Erfindung betrifft eine Austrageinrichtung einer landwirtschaftlichen Erntemaschine, mit einem ersten Aktor und einem zweiten Aktor, die mit einer Einrichtung zur Steuerung ihrer Position verbunden und jeweils eingerichtet sind, die Position eines erntegutleitenden Elements der Austrageinrichtung zu verändern, wobei die Einrichtung zur Steuerung der Position der Aktoren eine mit den Aktoren und mit einer Eingabeeinrichtung verbundene Steuerung umfasst und die Position der Austrageinrichtung mittels der Eingabeeinrichtung veränderbar ist.

Bei der Ernte von landwirtschaftlichen Gütern auf einem Feld ist es gängige Praxis, dass eine Erntemaschine ein neben der Erntemaschine herfahrendes Transportfahrzeug mit geerntetem Gut belädt. Das Transportfahrzeug, beispielsweise ein Schlepper mit Anhänger oder ein Lastwagen, wird durch eine Austrageinrichtung der Erntemaschine mit dem geernteten Gut beladen, beispielsweise bei einem Feldhäcksler durch einen Austragschacht und bei einem Mähdrescher durch ein Entladerohr. Die Austrageinrichtung ist in der Regel um eine vertikale Achse drehbar an der Erntemaschine befestigt und zwischen einer Ruhestellung, in der sie etwa parallel zur Längsachse der Erntemaschine orientiert ist, und einer Arbeitsposition, in der sie sich quer zur Fahrrichtung der Erntemaschine erstreckt, verschwenkbar. Zusätzlich kann die Höhe des abgabeseitigen Endes der Austrageinrichtung variierbar sein, wie auch die Position einer Auswurfklappe, welche den Winkel definiert, unter dem das geerntete Gut abgegeben wird.

Im einfachsten Fall wird die Position der Austrageinrichtung manuell durch den Fahrer der Erntemaschine gesteuert. Dabei ist als nachteilig anzusehen, dass die Steuerung der Position der Austrageinrichtung einen beträchtlichen Teil der Aufmerksamkeit des Fahrers in Anspruch nimmt.

Bei einigen Typen von Feldhäckslern ist die Drehachse der Austrageinrichtung nicht exakt vertikal orientiert, sondern um einen bestimmten Winkel nach hinten geneigt, um den ohne Kollision mit der Fahrerkabine möglichen Drehbereich der Austrageinrichtung zu vergrößern. Andererseits ändert sich bei einer Drehung der Austrägeinrichtung die Auswurfhöhe, was insbesondere bei seitlich zu befüllenden Transportwagen nachteilig ist, da nach einer Drehung der Austrageinrichtung auch eine manuelle Höhenverstellung zur Korrektur der Abgabehöhe bzw. -richtung erforderlich ist. Analog ist im Stand der Technik eine manuell veranlasste Verstellung der Auswurfklappe erforderlich, um die Auswurfrichtung beizubehalten, wenn die Austrageinrichtung unterhalb von Bäumen oder Stromleitungen abgesenkt wird.

In der EP 0 666 018 A wurde vorgeschlagen, eine landwirtschaftliche Erntemaschine mit einer Einrichtung zur selbsttätigen Steuerung der Position der Austrageinrichtung auszustatten, die eingerichtet ist, die Lage eines Transportfahrzeugs zu erfassen und die Austrageinrichtung entsprechend zu positionieren.

Weiterhin wird in der EP 1 151 652 A und der als gattungsbildend angesehenen EP 1 250 832 A vorgeschlagen, in einer Speichereinrichtung einen Sollwert für die Position der Austrageinrichtung einzugeben, der durch eine Eingabeeinrichtung abrufbar ist. Die Austrageinrichtung wird selbsttätig in die abgerufene Position verbracht, wobei die EP 1 250 832 A vorsieht, die verschiedenen Aktoren gleichzeitig oder nacheinander zu betätigen, um die gewünschte Position anzusteuern.

In der nachveröffentlichten EP 1 405 555 A wird vorgeschlagen, den Auswurfkrümmer eines Feldhäckslers nach einem selbsttätig erkannten Übergang auf eine Straßenfahrt selbsttätig in die Parkstellung zu verbringen, wobei zunächst ein Verschwenken des Auswurfkrümmers um die vertikale Achse und dann ein Absenken um eine horizontale Achse erfolgt.

Die JP 10 000 015 A offenbart einen Mähdrescher, bei dem ein verschwenkbarer Korntankentladungsschneckenförderer durch sensorgesteuerte Aktoren in einer gespeicherten Position gehalten wird. Die Anzahl der abspeicherbaren Positionen der Austrageinrichtung ist jedoch begrenzt und insbesondere dann nicht hinreichend, wenn sich die relativen Positionen von Feldhäcksler und Transportfahrzeug ändern.

Die DE 198 48 127 A beschreibt einen Feldhäcksler, bei dem eine Überladezielentfernung mittels eines Potentiometers eingebbar ist. Die Überladezielentfernung kann auch durch Betätigen eines Tasters aus den momentanen Einstellungen der Austrageinrichtung und der Vorgabe einer Zielhöhe abgeleitet werden. Die Austrageinrichtung wird anhand einer die Fahrtrichtung des Feldhäckslers vorgebenden Größe, z. B. dem Lenkwinkel, derart angesteuert, dass die programmierte Überladezielentfernung und -höhe eingehalten wird. Beim Umfahren einer Kurve wird die Austrageinrichtung somit selbsttätig nachgestellt, um das Erntegut auf das Transportfahrzeug zu überladen. Diese Anordnung kann aber nur funktionieren, wenn das Transportfahrzeug sich auf vordefinierten Wegen bewegt, insbesondere wenn es stets hinter dem Feldhäcksler fährt oder von ihm gezogen wird.

Das der Erfindung zu Grunde liegende Problem wird darin gesehen, eine Austrageinrichtung einer Erntemaschine bereitzustellen, die nicht die erwähnten Nachteile hat.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt eine Austrageinrichtung einer landwirtschaftlichen Erntemaschine vor, die ein oder mehrere erntegutleitende Elemente aufweist, deren Position durch einen ersten und einen zweiten Aktor veränderbar ist. Eine Einrichtung zur Steuerung der Position der Aktoren umfasst eine mit den Aktoren und mit einer Eingabeeinrichtung verbundene Steuerung. Die Position der Austrageinrichtung ist mittels der Eingabeeinrichtung veränderbar. Es wird vorgeschlagen, dass eine Einrichtung zur Steuerung der Position der Aktoren die Position des zweiten Aktors in Abhängigkeit von der Position des ersten Aktors steuert, wenn der erste Aktor verstellt wird.

Auf diese Weise erreicht man, dass die Position des zweiten Aktors selbsttätig an die des ersten Aktors angepasst wird. Der Bediener braucht den zweiten Aktor somit nicht manuell zu verstellen, wenn der erste Aktor zur Anpassung an eine geänderte Situation verstellt wird, da die Verstellung des zweiten Aktors selbsttätig durch die Steuerung vorgenommen wird. Die Steuerung arbeitet in der Regel elektronisch und bewegt die Aktoren elektromagnetisch oder durch elektromagnetisch gesteuerte Hilfskräfte, die pneumatisch bzw. hydraulisch bereitgestellt werden. Alternativ arbeitet sie hydraulisch, mit einem Steuerzylinder, der durch den ersten Aktor bewegt wird und den zweiten Aktor hydraulisch beaufschlagt.

Im Einzelnen kann der zweite Aktor derart angesteuert werden, dass die Auswurfhöhe, d. h. die Höhe des Auslasses der Austrageinrichtung, beibehalten wird, wenn die Austrageinrichtung bewegt - insbesondere um die Hochachse gedreht - wird. Diese Ausführungsform ist besonders sinnvoll, wenn der erste Aktor eine Drehung der Austrageinrichtung um eine etwa vertikale, jedoch nicht ganz senkrechte Achse bewirkt. Die Steuerung gleicht somit die Höhenänderung des Auslasses der Austrageinrichtung beim Drehen um die etwa vertikale Achse aus.

Bei einer anderen Ausführungsform oder einer anderen Betriebsart derselben Ausführungsform kann die Steuerung betreibbar sein, die Auswurfrichtung der Austrageinrichtung gegenüber dem Erdboden unabhängig von der Höhe des Auswurfendes der Austrageinrichtung zu steuern. Wird die Austrageinrichtung somit beispielsweise unter Bäumen oder Stromleitungen abgesenkt, wird durch die Steuerung selbsttätig eine Auswurfklappe am Auswurfende derart verstellt, dass die Auswurfrichtung beibehalten wird und das Erntegut sicher das Transportfahrzeug erreicht.

Der Zusammenhang zwischen der Position des ersten Aktors (der z. B. den Drehwinkel um die Hochachse bzw. die Höhe des Austragendes der Austrageinrichtung vorgibt) und der Position des zweiten Aktors (der z. B. zur Höhenverstellung bzw. zur Verstellung der Auswurfklappe dient) kann in einer elektronischen Steuerung fest vorgegeben oder durch den Bediener eingebbar sein, um ihn an die jeweilige Situation anpassen und beispielsweise unterschiedliche Neigungswinkel und Abmessungen der Austrageinrichtung berücksichtigen zu können, die sich auch nachträglich, zum Beispiel bei Umbauten, ändern können. Eine Eingabe kann durch eine Tastatur oder ein oder mehrere Potentiometer erfolgen, mit denen Proportionalitätskonstanten zwischen den beiden Positionen und ein Referenzpunkt eingegeben werden. Auch kann die Eingabe durch sukzessives manuell angesteuertes Anfahren unterschiedlicher Positionen der Austrageinrichtung und entsprechende Bestätigungseingaben in eine Eingabeeinrichtung erfolgen.

Die Verstellung der Position des ersten Aktors erfolgt in der Regel manuell. Sie kann aber auch selbsttätig erfolgen, beispielsweise durch eine Einrichtung zur Erfassung der Position des Transportfahrzeugs, die ein Merkmal des Transportfahrzeugs optisch oder durch mit akustischen oder elektromagnetischen Wellen arbeitenden Abstandssensoren erfasst oder der Informationen über die Position des Transportfahrzeugs und der Erntemaschine zugeführt werden, die beide durch Positionssensoren generiert werden, z. B. durch GPS-Antennen.

In den Zeichnungen sind zwei nachfolgend näher beschriebene Ausführungsbeispiele der Erfindung dargestellt. Es zeigt:
- Fig. 1: eine Erntemaschine in Seitenansicht und in schematischer Darstellung,
- Fig. 2: ein Blockdiagramm einer Steuerung zur Kontrolle der Position der Austrageinrichtung der Erntemaschine,
- Fig. 3: eine Ansicht einer Eingabeeinrichtung,
- Fig. 4: eine Draufsicht auf eine Erntemaschine mit einer zweiten Ausführungsform einer Steuerung zur Kontrolle der Position der Austrageinrichtung der Erntemaschine, und
- Fig. 5: einen Ausschnitt des Blockdiagramms aus Figur 2, enthaltend ein Hydraulikschema für die Ausführungsform aus Figur 4.

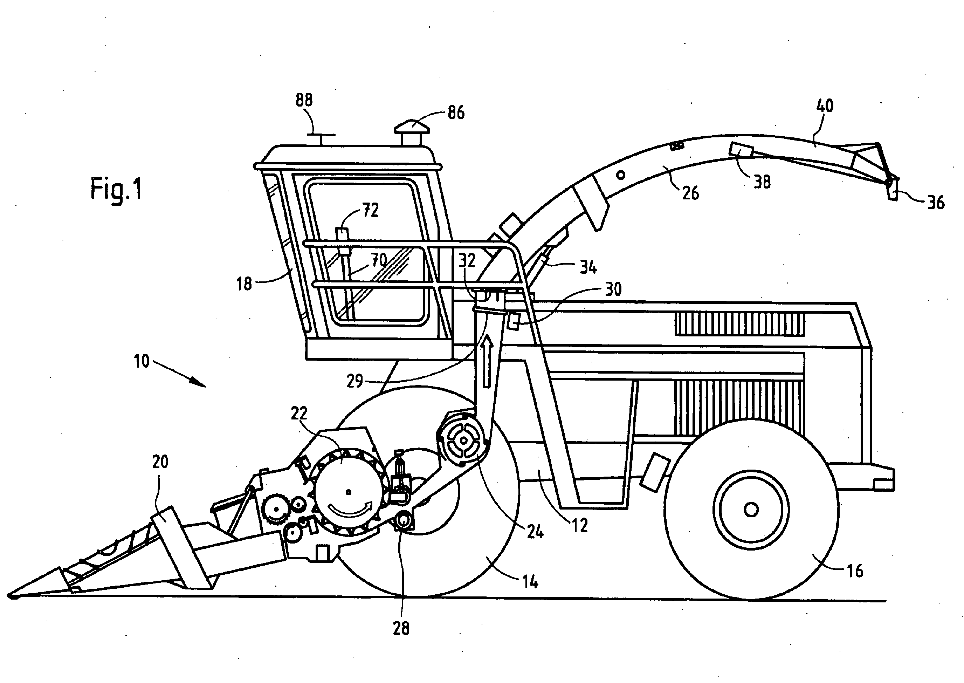

Eine in der Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Transportfahrzeug über eine Austrageinrichtung 26 in Form eines drehbaren Austragsschachts. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Die Position der Austrageinrichtung 26 kann durch drei Aktoren 30, 34, 38 verändert werden. Ein Aktor 30 in Form eines in Drehung versetzbaren Hydraulikmotors (alternativ wäre ein Linearmotor verwendbar) dient zur Drehung der an einem Drehkranz 29 um eine etwa vertikale Achse drehbar gelagerten Austrageinrichtung 26. Der Aktor 30 ermöglicht somit, die Austrageinrichtung 26 nach hinten in die in der Figur 1 dargestellte Transportposition zu drehen, oder sie in einen bestimmten Winkel quer zur Fahrtrichtung der Erntemaschine 10 zu verbringen. Die Achse des Drehkranzes 29 ist nicht genau vertikal, sondern gegenüber der Vertikalen bezüglich der Fahrtrichtung nach hinten geneigt. Dadurch vergrößert man den ohne Kollision mit der Fahrerkabine 18 möglichen Drehbereich der Austrageinrichtung 26. Der Aktor 30 greift mit einem Zahn- oder Schneckenrad in ein mit dem Drehkranz drehfest gekoppeltes Zahnrad ein.

Ein Aktor 34 in Form eines Hydraulikzylinders ist eingerichtet, die Austrageinrichtung 26 sich um eine an ihrem stromauf liegenden Ende befindende, horizontale Achse 32 zu verschwenken. Der Aktor 34 definiert somit die Höhe des Austragendes der Austrageinrichtung 26. Ein Aktor 38 in Form eines Hydraulikzylinders oder Linearmotors dient zur Verschwenkung einer Auswurfklappe 36 am Austragende 40 der Austrageinrichtung 26. Die verstellbare Auswurfklappe 36 ermöglicht, den Winkel einzustellen, unter dem das geerntete Gut die Austrageinrichtung 26 verlässt. Die Aktoren 34 und 38 sind einfach oder doppelt wirkende Hydraulikzylinder, wobei bei einfach wirkenden Hydraulikzylindern die Eigengewichte der Austrageinrichtung 26 bzw. der Auswurfklappe 36 oder eine Rückstelleinrichtung, z. B. eine Zugfeder oder eine Gaszugfeder die Rückbewegung ermöglichen. In der dargestellten Ausführungsform sind beide Aktoren 34 und 38 doppelt wirkend. Der Aktor 30 kann die Austrageinrichtung 26 im Uhrzeigersinn und (zeitlich daran anschließend) im Gegenuhrzeigersinn drehen. Die Austrageinrichtung 26 als solche und die Aktoren 30, 34, 38 sind im Stand der Technik grundsätzlich bekannt, s. beispielsweise EP 1 040 745 A, EP 0 760 202 A und EP 0 672 339 A.

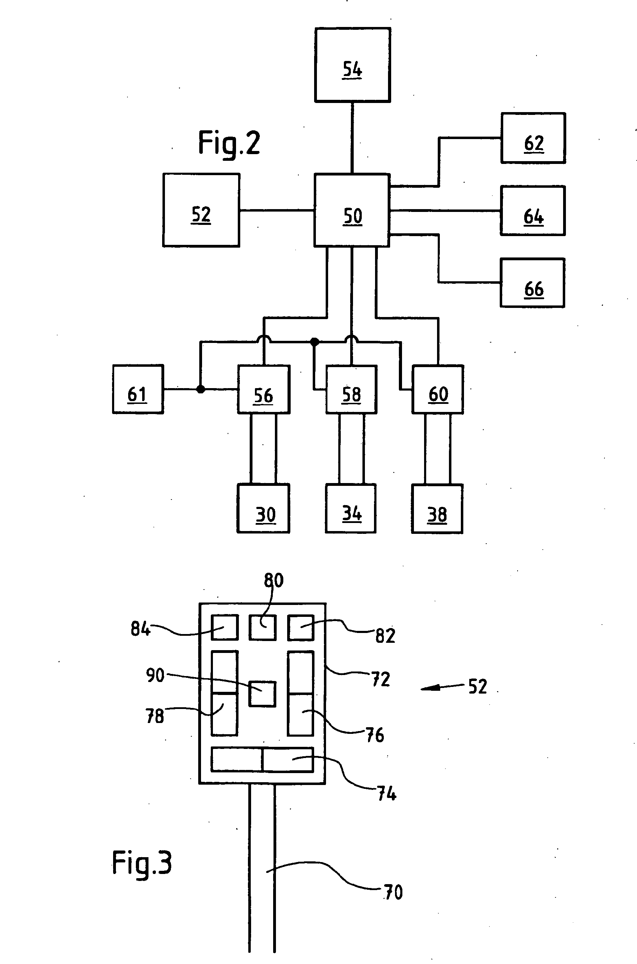

In der Figur 2 ist ein Blockdiagramm wiedergegeben, das den Aufbau einer ersten Ausführungsform einer Einrichtung zur Steuerung der Position der Austrageinrichtung 26 zeigt. Eine Steuerung 50 in Form eines Mikroprozessors oder Mikrocontrollers ist mit einer Eingabeeinrichtung 52 und einer Speichereinrichtung 54 verbunden.

Weiterhin ist die Steuerung mit drei elektromagnetisch gesteuerten Ventilen 56, 58, 60 verbunden, die ihrerseits eingangsseitig hydraulisch mit einer Einrichtung 61 zur Bereitstellung unter Betriebsdruck stehender Hydraulikflüssigkeit (z. B. einem Druckbehälter oder einer Pumpe) und ausgangsseitig mit jeweils einem der Aktoren 30, 34 und 38 in Wirkverbindung stehen. Die Aktoren 30, 34 und 38 sind durch jeweils zwei Hydraulikleitungen mit den Ventilen 56 bzw. 60 verbunden, da der Aktor 30 ein in zwei Drehrichtungen betreibbarer Hydraulikmotor und die Aktoren 34, 38 doppelt wirkende Hydraulikzylinder sind. In dieser Ausführungsform könnte der Aktor 34 auch ein einfach wirkender Zylinder sein.

Schließlich ist die Steuerung 50 mit drei Sensoren 62, 64 und 66 verbunden. Der Sensor 62 erfasst die Position des Aktors 30 zur Drehung der Austrageinrichtung 26, liefert also eine Information über den jeweiligen Schwenkwinkel der Austrageinrichtung 26. Der zweite Sensor 64 erfasst die Position des Aktors 34 zur Höhenverstellung der Austrageinrichtung 26 und stellt eine Information über den Schwenkwinkel der Austrageinrichtung 26 um die horizontale Achse 32 bereit. Der dritte Sensor 66 liefert eine Information über die Stellung des Aktors 38 zum Verschwenken der Auswurfklappe 36, d. h. über den Schwenkwinkel der Auswurfklappe 36. Die in Figur 1 nicht eingezeichneten Sensoren 62, 64, 66 können in das Gehäuse der Aktoren 30, 34, 38 integriert oder an beliebiger, geeigneter Stelle im Abstand von den Aktoren 30, 34, 38 angeordnet sein. Die Sensoren 62, 64 und 66 sind vorzugsweise mit Analog-Digitalwandlern ausgestattet, so dass die Steuerung 50 digitale Daten erhält. Denkbar wäre aber auch, insbesondere über separate Leitungen, der Steuerung 50 von den Sensoren 62, 64 und 66 bereitgestellte analoge Werte zu übersenden.

Die Steuerung 50 ist in der Regel über eine Busleitung, in der Regel in Form eines CAN-Busses, mit der Eingabeeinrichtung 52, den Ventilen 56, 58, 60 und den Sensoren 62, 64 und 66 verbunden, um den Verdrahtungsaufwand zu reduzieren. Die Speichereinrichtung 54 kann monolithisch in die Steuerung 50 integriert oder durch Leitungen mit ihr verbunden sein. Die Speichereinrichtung 54 ist nicht-flüchtig, um zu verhindern, dass die in ihr gespeicherten Daten nach Abschalten der Zündung oder bei Batterieausfall der Erntemaschine 10 verloren gehen. Dazu kann eine Stützbatterie vorgesehen sein, oder es finden statische RAMs Verwendung.

In der Figur 3 ist die Eingabeeinrichtung 52 detaillierter dargestellt. Sie ist in Form eines Multifunktionshandgriffs 72 realisiert, der an der Oberseite eines schwenkbaren Arms 70 angebracht ist. Der Arm 70 ist seitlich neben dem Arbeitsplatz in der Fahrerkabine 18 angeordnet. Durch Verschwenken des Arms 70 um eine horizontale, an seinem unteren Ende quer zur Fahrtrichtung angeordnete Schwenkachse kann in an sich bekannter Weise die Fahrgeschwindigkeit der Erntemaschine 10 vorgegeben werden.

Der Multifunktionshandgriff 72 weist drei Wippschalter 74, 76, 78 auf. Außerdem weist er drei Tastschalter 80, 82, 84 auf. Die Wippschalter 74, 76, 78 und die Tastschalter 80, 82, 84 sind alle elektrisch mit der Steuerung 50 verbunden.

Der erste Wippschalter 74 dient zur Betätigung des zum Drehen der Austrageinrichtung 26 um die Hochachse dienenden Aktors 30. Wird die linke Hälfte des ersten Wippschalters 74 niedergedrückt, wird über die Steuerung 50 und das erste Ventil 56 der Aktor 30 derart mit Hydraulikflüssigkeit beaufschlagt, dass sich die Austrageinrichtung 26 in eine erste Richtung dreht, z. B. im Uhrzeigersinn. Wird analog die rechte Hälfte des ersten Wippschalters 74 niedergedrückt, wird über die Steuerung 50 und das erste Ventil 56 der Aktor 30 derart mit Hydraulikflüssigkeit beaufschlagt, dass sich die Austrageinrichtung in die entgegengesetzte Richtung dreht. Wird der erste Wippschalter 74 nicht betätigt, steht der Aktor 30 still.

Der zweite Wippschalter 76 dient zur Betätigung des zur Höhenverstellung dienenden Aktors 34. Wird die obere Hälfte des zweiten Wippschalters 76 niedergedrückt, wird über die Steuerung 50 und das zweite Ventil 58 der Aktor 34 derart mit Hydraulikflüssigkeit beaufschlagt, dass die Austrageinrichtung in vertikaler Richtung um die Achse 32 nach oben verschwenkt. Wird analog die untere Hälfte des zweiten Wippschalters 76 niedergedrückt, wird über die Steuerung 50 und das zweite Ventil 58 der Aktor 34 von Hydraulikflüssigkeit entleert, so dass sich die Austrageinrichtung 26 in die entgegengesetzte Richtung nach unten absenkt. Wird der zweite Wippschalter 76 nicht betätigt, steht der Aktor 34 still.

Der dritte Wippschalter 78 dient zur Betätigung des Aktors 38 zur Verstellung der Auswurfklappe 36. Wird die obere Hälfte des dritten Wippschalters 78 niedergedrückt, wird über die Steuerung 50 und das dritte Ventil 60 der Aktor 38 derart mit Hydraulikflüssigkeit beaufschlagt, dass die Auswurfklappe 36 nach oben verschwenkt wird. Wird analog die untere Hälfte des dritten Wippschalters 76 niedergedrückt, wird über die Steuerung 50 und das dritte Ventil 60 der Aktor 38 derart mit Hydraulikflüssigkeit beaufschlagt, dass sich die Auswurfklappe 36 in die entgegengesetzte Richtung dreht. Wird der dritte Wippschalter 78 nicht betätigt, steht der Aktor 38 still.

Auf diese Weise ermöglichen die drei Wippschalter 74, 76 und 78, die Austrageinrichtung 26 derart zu positionieren, dass von der Erntemaschine 10 aufgenommenes Gut auf ein Transportfahrzeug gelangt. Aufgrund der nach hinten geneigten Achse des Drehkranzes 29 ändert sich jedoch bei einer Betätigung des Aktors 30 mit dem ersten Wippschalter 74 auch die Höhe des Austragendes 40 der Austrageinrichtung 26, was insbesondere bei seitlich zu befüllenden Transportfahrzeugen nachteilig ist. Um dieses Problem zu lösen, kann durch Betätigen des Tastschalters 80 eine Betriebsart ausgewählt werden, in der der Aktor 34 (der hier als zweiter Aktor wirkt) abhängig von der Position des Aktors 30 (der hier als erster Aktor wirkt) angesteuert wird. Die Anwahl dieser Betriebsart wird vorzugsweise durch eine Leuchtanzeige im Tastschalter 80 bestätigt. Die Ansteuerung des Aktors 34 erfolgt dann durch die Steuerung 50 derart, dass die Höhe des Austragendes 40 konstant bleibt. Dazu sind im Speicher 54 entsprechende Zusammenhänge zwischen dem Winkel des Aktors 30 und der Position des Aktors 34 abgelegt, insbesondere in Form von Tabellen oder funktionalen Zusammenhängen. Die beim Auswählen dieser Betriebsart durch Betätigung des Tastschalters 80 vorhandene Höhe des Austragendes 40 wird jeweils beibehalten. Dadurch kann der Bediener die Austrageinrichtung 26 mittels des Wippschalters 74 zum Drehen veranlassen, ohne dass eine Anpassung der Höhe des Austragendes 40 mit dem Wippschalter 76 erforderlich wäre. Diese Betriebsart könnte auch permanent aktiv sein.

Weiterhin kommen beim Erntebetrieb Situationen vor, in denen der Aktor 34 zu verstellen ist, um die Austrageinrichtung 26 unter Bäumen, Stromleitungen oder anderen überhängenden Gegenständen abzusenken. Damit verändert sich jedoch auch die Auswurfrichtung gegenüber dem Erdboden, so dass nicht immer gewährleistet ist, dass das Erntegut das Transportfahrzeug erreicht. Der Bediener muss daher im Stand der Technik nicht nur den Wippschalter 76 zum Absenken der Austrageinrichtung 26 mittels des Aktors 34 bedienen, sondern auch den Wippschalter 78 betätigen, um die Auswurfklappe 36 anzuheben, so dass etwa dieselbe Auswurfrichtung gegenüber dem Erdboden beibehalten wird. Zur Behebung dieses Nachteils kann mittels des Tastschalters 82 eine zweite Betriebsart ausgewählt werden, in welcher der Aktor 38 (der hier als zweiter Aktor wirkt) in Abhängigkeit von der Position des Aktors 34 (der hier als erster Aktor wirkt) angesteuert wird. Die Anwahl dieser Betriebsart wird vorzugsweise durch eine Leuchtanzeige im Tastschalter 82 bestätigt. Im Speicher 54 ist eine Information abgelegt, wie der Aktor 38 bei einer Änderung der Position des Aktors 34 zu positionieren ist. Dabei kann es sich, wie oben beschrieben, um eine Tabelle oder einen anderen funktionalen Zusammenhang handeln. Die beim Auswählen der zweiten Betriebsart durch den Tastschalter 82 jeweils vorhandene Auswurfrichtung der Austrageinrichtung 26 wird beibehalten. Somit kann der Bediener durch Betätigen des Wippschalters 76 die Höhe des Austragendes 40 verändern, ohne dass eine Verstellung der Auswurfklappe 36 mit dem Wippschalter 78 erforderlich wäre. Diese Betriebsart könnte auch permanent aktiv sein.

Beide erwähnten Betriebsarten können durch eine zweite Betätigung der Tastschalter 80 bzw. 82 wieder ausgeschaltet werden. Es können auch beide Betriebsarten gleichzeitig ausgewählt werden, indem beide Tastschalter 80 und 82 betätigt werden. Dann hängt die Position des Aktors 34 von der des Aktors 30 ab, und die des Aktors 38 von der des Aktors 34, die wiederum von der des Aktors 30 abhängt. In allen Betriebsarten können alle Aktoren 30, 34, 38 durch die Wippschalter 74, 76 und 78 verstellt werden, um die Stellung der Austrageinrichtung 26 an sich ändernde Gegebenheiten anzupassen.

Der dritte Tastschalter 84 dient dazu, eine Speicherbetriebsart auszuwählen. In dieser Betriebsart kann der Bediener mittels der Wippschalter 74, 76 und 78 mindestens zwei Stellungen der Austrageinrichtung 26 anfahren, die durch Betätigen des Tastschalters 80 für die erste Betriebsart und des Tastschalters 82 für die zweite Betriebsart bestätigt werden. Durch die Sensoren 62, 64, 66 werden dann die jeweiligen Positionen der Aktoren 30, 34, 38 erfasst und durch die Steuerung 50 werden die Daten im Speicher 54, die zum Ansteuern des Aktors 34 in der ersten Betriebsart und des Aktors 38 in der zweiten Betriebsart dienen, angepasst. Dadurch kann die Steuerung 50 auf einfache Weise an geänderte Bedingungen, wie eine modifizierte Geometrie der Austrageinrichtung 26, angepasst werden.

Die Erntemaschine 10 ist mit einer GPS-Antenne 86 und einer Radioantenne 88 ausgestattet. Mit der GPS-Antenne 86 wird eine Information über die jeweilige Position der Erntemaschine 10 in einem terrestrischen Koordinatensystem generiert. Die Radioantenne 88 dient zum Empfang eines Positionssignals, ebenfalls in einem terrestrischen Koordinatensystem, von einem Transportfahrzeug. Mit den Signalen der Antennen 86, 88 kann ein Signal zur automatischen Ansteuerung der Aktoren 30, 34 und 38 erzeugt werden, so dass das Erntegut selbsttätig auf dem Transportfahrzeug abgelegt wird. Die entsprechende Betriebsart kann durch einen Schalter 90 ausgewählt werden. In dieser Betriebsart wird zumindest die Position des Aktors 30 bei der Ansteuerung des Aktors 34 in der oben beschriebenen Weise berücksichtigt, um der nach hinten geneigten Achse des Drehkranzes 29 Rechnung zu tragen. Auch kann die Position des Aktors 34 bei der Ansteuerung des Aktors 38 Berücksichtigung finden.

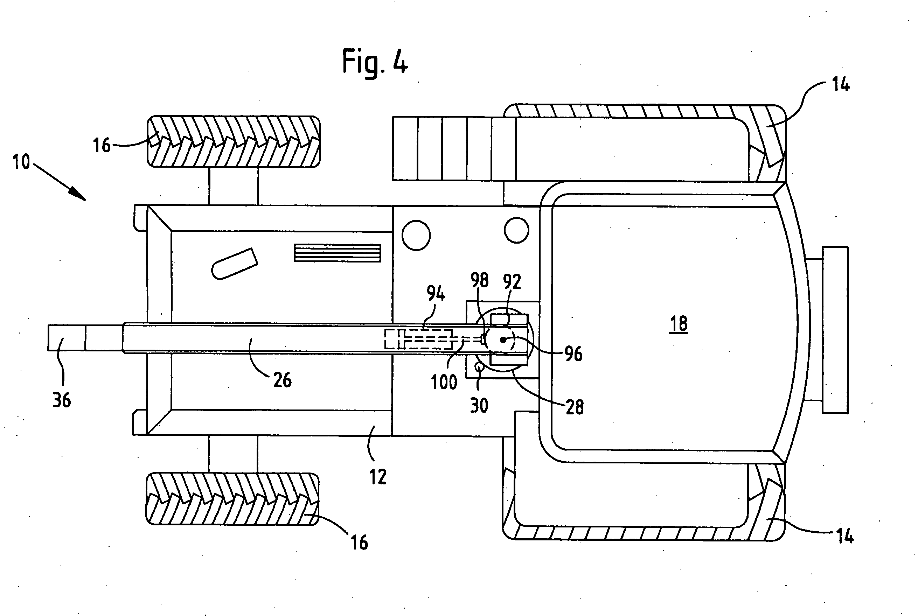

In der Figur 4 ist eine Erntemaschine 10 in Form eines Feldhäckslers in Draufsicht dargestellt, bei der eine zweite Ausführungsform einer Einrichtung zur Steuerung der Position der Austrageinrichtung 26 verwirklicht ist. Mit der ersten Ausführungsform übereinstimmende Elemente sind mit übereinstimmenden Bezugszeichen versehen. Bei der Erntemaschine 10 gemäß Figur 4 ist oberhalb des Drehkranzes 29 an der Austrageinrichtung 26 ein exzentrisches Steuerelement 92 angeordnet, das die Austrageinrichtung 26 ringförmig umrundet und mit der Austrageinrichtung 26 mitdreht. Die Mitte des kreiszylindrischen Steuerelements 92 ist gegenüber der um einen kleinen Winkel gegenüber der Vertikalen nach hinten geneigten Drehachse 96 der Austrageinrichtung 26 nach hinten versetzt, d. h. ihr gegenüber exzentrisch angeordnet. In Fahrtrichtung hinter der Drehachse 96 befindet sich ein am Steuerelement anliegendes Folgeelement 98, das mit der Kolbenstange 100 eines Steuerzylinders 94 verbunden ist. Der Steuerzylinder 94 ist am Rahmen 12 der Erntemaschine 10 festgelegt.

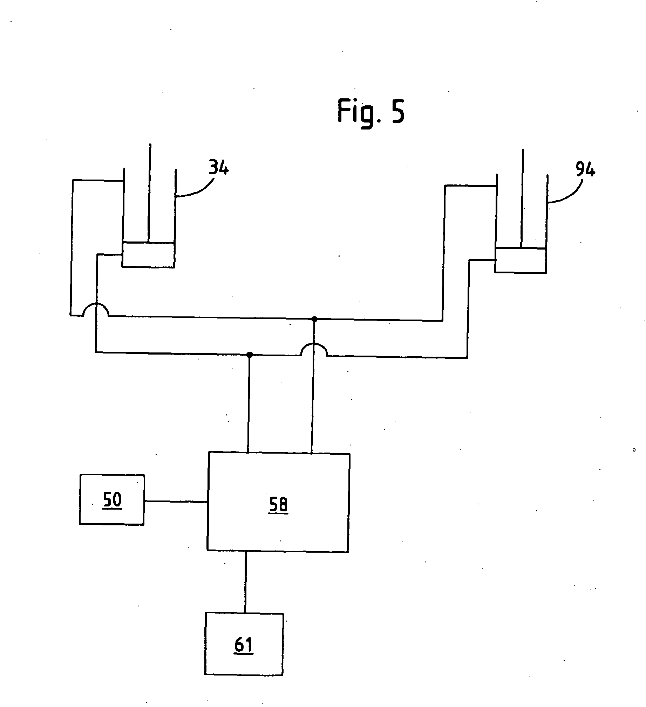

Der hydraulische Aufbau der Steuerung zur Kontrolle der Position der Austrageinrichtung 26 ist in der Figur 5 dargestellt. Er entspricht außer der Hinzufügung des Steuerzylinders 94 den entsprechenden Teilen aus Figur 2. Das zweite Ventil 58 ist, wie bei der ersten Ausführungsform, mit einer Steuerung 50 verbunden, wie sie in der Figur 2 dargestellt ist. Die in Figur 5 zur Vereinfachung nicht dargestellten, mit der Anordnung aus Figur 2 identischen Teile der Steuerung 50 ermöglichen ein Verstellen der Aktoren 30 und 38 durch den Bediener über die Wippschalter 74 und 78 und Ventile 56 und 60. Die Steuerung 50 ermöglicht auch ein Verstellen des Aktors 34 über den Wippschalter 76. Beim Verstellen des Aktors 30 entfällt jedoch die oben beschriebene elektronische Ansteuerung des Aktors 34 zum Ausgleich des Neigungswinkels des Drehkranzes 29.

Der Aktor 34 steht mit dem Steuerzylinder 94 in Fluid übertragender Verbindung, wie in der Figur 5 dargestellt. Es sind die Kolbenstangenkammer des Aktors 34 mit der Kolbenstangenkammer des Steuerzylinders 94 und die Zylinderkammer des Steuerzylinders 94 mit der Zylinderkammer des Aktors 34 untereinander direkt verbunden. Wird der Aktor 30 aktiviert, dreht sich das Steuerelement 92 mit der Austrageinrichtung 26 um die Achse 96. Durch die Exzentrizität des Steuerelements 92 bewegt sich auch das Folgeelement 98 in der Fahrtrichtung der Erntemaschine 10 nach vorn, so dass die Kolbenstange 100 des Steuerzylinders 94 entsprechend mitbewegt wird. Je weiter die Austrageinrichtung 26 durch den Aktor 30 aus der in der Figur 4 dargestellten Parkposition nach vorn gedreht wird, umso weiter wird die Kolbenstange 100 des Steuerzylinders 94 nach vorn geschoben. Es wird daher laufend Fluid aus der Kolbenstangenkammer des Steuerzylinders 94 in die Kolbenstangenkammer des Aktors 34 verbracht. Gleichzeitig strömt Fluid aus der Zylinderkammer des Aktors 34 in die Zylinderkammer des Steuerzylinders 94. Die Austrageinrichtung 26 wird durch den Aktor 34 sukzessive abgesenkt, je weiter die Austrageinrichtung 26 nach vorn gedreht wird.

Die Abmessungen des Steuerelements 92, des Steuerzylinders 94 und des Aktors 34 sind derart dimensioniert, dass durch die Bewegung des Aktors 34, die sich beim Drehen der Austrageinrichtung 26 um die Achse 96 ergibt, die Neigung der Achse 96 ausgeglichen wird. Das äußere Ende der Austrageinrichtung 26 bewegt sich im Ergebnis auf einer horizontalen Bahn. Der Tastschalter 80 kann hier entfallen, da der Höhenausgleich aufgrund der hier gewählten hydraulischen Steuerung permanent aktiv ist. Es kann auch auf die Sensoren 62 bis 66 verzichtet werden. Bei einer anderen Ausführungsform könnte das Steuerelement 92 derart geformt sein, dass es nur dann den Steuerzylinder 94 bewegt, wenn er sich auf einer bestimmten Seite, z. B. der linken Seite, der Erntemaschine 10 befindet.
Die Höhenkontrolle findet dann nur statt, wenn sich die Austrageinrichtung 26 auf dieser Seite befindet, die insbesondere der Seite entspricht, von der aus die meisten Ladebehälter zu befüllen sind. Eine analog arbeitende hydraulische Ansteuerung des Aktors 38 basierend auf einem Steuerzylinder, der durch den Aktor 34 bewegt wird, wäre ebenfalls denkbar. Ebenso wäre eine Ansteuerung des Aktors 38 durch den Steuerzylinder 94 möglich, um die Auswurfrichtung anzupassen. Dabei wären dann aber die Zylinderkammern jeweils mit den Kolbenstangenkammern der anderen Zylinder zu verbinden.

Durch die Masse der Austrageinrichtung 26 sind die Zylinderkammern des Aktors 34 und des Steuerzylinders 94 in einem gewissen Maß mit Druck beaufschlagt, so dass das Folgeelement 98 einen Druck auf das Steuerelement 92 ausübt, wodurch sich ein Drehmoment auf die Austrageinrichtung 26 ergibt, zumindest solange die Austrageinrichtung 26 nicht in Fahrtrichtung ausgerichtet ist. Dieser Druck dient auch dazu, das Folgeelement 98 stets in Anlage am Steuerelement 92 zu halten. Zur Entlastung des Aktors 30 kann der Drehkranz 29 in an sich bekannter Weise selbsthemmend sein.

Die Erfindung kann auch an Mähdreschern mit verschwenk- und höhenverstellbaren Korntankentladungsschneckenförderern Verwendung finden, insbesondere mit nicht-vertikaler Schwenkachse.

### Beschreibung für folgende(n) Vertragsstaat(en): BE, DE, FR, GB

Die Erfindung betrifft einen Feldhäcksler mit einer Erntegutaufnahmevorrichtung, einer Häckseltrommel, einer Fördervorrichtung, einer zwischen der Häckseltrommel und der Fördervorrichtung angeordneten Nachzerkleinerungsvorrichtung und einer Austrageinrichtung, die mit einem ersten Aktor und einem zweiten Aktor versehen ist, wobei die Aktoren mit einer Einrichtung zur Steuerung ihrer Position verbunden und jeweils eingerichtet sind, die Position eines erntegutleitenden Elements der Austrageinrichtung zu verändern, die Einrichtung zur Steuerung der Position der Aktoren eine mit den Aktoren und mit einer Eingabeeinrichtung verbundene Steuerung umfasst und die Position der Austrageinrichtung mittels der Eingabeeinrichtung veränderbar ist.

Bei der Ernte von landwirtschaftlichen Gütern auf einem Feld ist es gängige Praxis, dass eine Erntemaschine ein neben der Erntemaschine herfahrendes Transportfahrzeug mit geerntetem Gut belädt. Das Transportfahrzeug, beispielsweise ein Schlepper mit Anhänger oder ein Lastwagen, wird durch eine Austrageinrichtung der Erntemaschine mit dem geernteten Gut beladen, beispielsweise bei einem Feldhäcksler durch einen Austragschacht und bei einem Mähdrescher durch ein Entladerohr. Die Austrageinrichtung ist in der Regel um eine vertikale Achse drehbar an der Erntemaschine befestigt und zwischen einer Ruhestellung, in der sie etwa parallel zur Längsachse der Erntemaschine orientiert ist, und einer Arbeitsposition, in der sie sich quer zur Fahrtrichtung der Erntemaschine erstreckt, verschwenkbar. Zusätzlich kann die Höhe des abgabeseitigen Endes der Austrageinrichtung variierbar sein, wie auch die Position einer Auswurfklappe, welche den Winkel definiert, unter dem das geerntete Gut abgegeben wird.

Im einfachsten Fall wird die Position der Austrageinrichtung manuell durch den Fahrer der Erntemaschine gesteuert. Dabei ist als nachteilig anzusehen, dass die Steuerung der Position der Austrageinrichtung einen beträchtlichen Teil der Aufmerksamkeit des Fahrers in Anspruch nimmt.

Bei einigen Typen von Feldhäckslern ist die Drehachse der Austrageinrichtung nicht exakt vertikal orientiert, sondern um einen bestimmten Winkel nach hinten geneigt, um den ohne Kollision mit der Fahrerkabine möglichen Drehbereich der Austrageinrichtung zu vergrößern. Andererseits ändert sich bei einer Drehung der Austrageinrichtung die Auswurfhöhe, was insbesondere bei seitlich zu befüllenden Transportwagen nachteilig ist, da nach einer Drehung der Austrageinrichtung auch eine manuelle Höhenverstellung zur Korrektur der Abgabehöhe bzw. -richtung erforderlich ist. Analog ist im Stand der Technik eine manuell veranlasste Verstellung der Auswurfklappe erforderlich, um die Auswurfrichtung beizubehalten, wenn die Austrageinrichtung unterhalb von Bäumen oder Stromleitungen abgesenkt wird.

In der EP 0 666 018 A wurde vorgeschlagen, eine landwirtschaftliche Erntemaschine mit einer Einrichtung zur selbsttätigen Steuerung der Position der Austrageinrichtung auszustatten, die eingerichtet ist, die Lage eines Transportfahrzeugs zu erfassen und die Austrageinrichtung entsprechend zu positionieren.

Weiterhin wird in der EP 1 151 652 A und der als gattungsbildend angesehenen EP 1 250 832 A vorgeschlagen, in einer Speichereinrichtung einen Sollwert für die Position der Austrageinrichtung einzugeben, der durch eine Eingabeeinrichtung abrufbar ist. Die Austrageinrichtung wird selbsttätig in die abgerufene Position verbracht, wobei die EP 1 250 832 A vorsieht, die verschiedenen Aktoren gleichzeitig oder nacheinander zu betätigen, um die gewünschte Position anzusteuern.

In der nachveröffentlichten EP 1 405 555 A wird vorgeschlagen, den Auswurfkrümmer eines Feldhäckslers nach einem selbsttätig erkannten Übergang auf eine Straßenfahrt selbsttätig in die Parkstellung zu verbringen, wobei zunächst ein Verschwenken des Auswurfkrümmers um die vertikale Achse und dann ein Absenken um eine horizontale Achse erfolgt.

Die ebenfalls nachveröffentlichte EP 1 393 613 A beschreibt einen Feldhäcksler, bei dem der Auswurfkrümmer selbsttätig angehoben wird, wenn er in eine Position gedreht wird, in der anderenfalls eine Kollision mit der Fahrerkabine droht. Beim Anheben des Auswurfkrümmers wird selbsttätig die Auswurfklappe nachgestellt, so dass der Überladeabstand konstant bleibt.

Die JP 10 000 015 A offenbart einen Mähdrescher, bei dem ein verschwenkbarer Korntankentladungsschneckenförderer durch sensorgesteuerte Aktoren in einer gespeicherten Position gehalten wird. Die Anzahl der abspeicherbaren Positionen der Austrageinrichtung ist jedoch begrenzt und insbesondere dann nicht hinreichend, wenn sich die relativen Positionen von Feldhäcksler und Transportfahrzeug ändern.

Die DE 198 48 127 A beschreibt einen Feldhäcksler, bei dem eine Überladezielentfernung mittels eines Potentiometers eingebbar ist. Die Überladezielentfernung kann auch durch Betätigen eines Tasters aus den momentanen Einstellungen der Austrageinrichtung und der Vorgabe einer Zielhöhe abgeleitet werden. Die Austrageinrichtung wird anhand einer die Fahrtrichtung des Feldhäckslers vorgebenden Größe, z. B. dem Lenkwinkel, derart angesteuert, dass die programmierte Überladezielentfernung und -höhe eingehalten wird. Beim Umfahren einer Kurve wird die Austrageinrichtung somit selbsttätig nachgestellt, um das Erntegut auf das Transportfahrzeug zu überladen. Diese Anordnung kann aber nur funktionieren, wenn das Transportfahrzeug sich auf vordefinierten Wegen bewegt, insbesondere wenn es stets hinter dem Feldhäcksler fährt oder von ihm gezogen wird.

Das der Erfindung zu Grunde liegende Problem wird darin gesehen, eine Austrageinrichtung einer Erntemaschine bereitzustellen, die nicht die erwähnten Nachteile hat.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf einen Feldhäcksler mit einer Erntegutaufnahmevorrichtung, einer Häckseltrommel, einer Fördervorrichtung, einer zwischen der Häckseltrommel und der Fördervorrichtung angeordneten Nachzerkleinerungsvorrichtung und einer Austrageinrichtung. Die Austrageinrichtung weist ein oder mehrere erntegutleitende Elemente auf, deren Position durch einen ersten und einen zweiten Aktor veränderbar ist. Eine Einrichtung zur Steuerung der Position der Aktoren umfasst eine mit den Aktoren und mit einer Eingabeeinrichtung verbundene Steuerung. Die Position der Austrageinrichtung ist mittels der Eingabeeinrichtung veränderbar. Es wird vorgeschlagen, dass eine Einrichtung zur Steuerung der Position der Aktoren die Position des zweiten Aktors in Abhängigkeit von der Position des ersten Aktors steuert, wenn der erste Aktor verstellt wird.

Auf diese Weise erreicht man, dass die Position des zweiten Aktors selbsttätig an die des ersten Aktors angepasst wird. Der Bediener braucht den zweiten Aktor somit nicht manuell zu verstellen, wenn der erste Aktor zur Anpassung an eine geänderte Situation verstellt wird, da die Verstellung des zweiten Aktors selbsttätig durch die Steuerung vorgenommen wird. Die Steuerung arbeitet in der Regel elektronisch und bewegt die Aktoren elektromagnetisch oder durch elektromagnetisch gesteuerte Hilfskräfte, die pneumatisch bzw. hydraulisch bereitgestellt werden. Alternativ arbeitet sie hydraulisch, mit einem Steuerzylinder, der durch den ersten Aktor bewegt wird und den zweiten Aktor hydraulisch beaufschlagt.

Im Einzelnen kann der zweite Aktor derart angesteuert werden, dass die Auswurfhöhe, d. h. die Höhe des Auslasses der Austrageinrichtung, beibehalten wird, wenn die Austrageinrichtung bewegt - insbesondere um die Hochachse gedreht - wird. Diese Ausführungsform ist besonders sinnvoll, wenn der erste Aktor eine Drehung der Austrageinrichtung um eine etwa vertikale, jedoch nicht ganz senkrechte Achse bewirkt. Die Steuerung gleicht somit die Höhenänderung des Auslasses der Austrageinrichtung beim Drehen um die etwa vertikale Achse aus.

Bei einer anderen Ausführungsform oder einer anderen Betriebsart derselben Ausführungsform kann die Steuerung betreibbar sein, die Auswurfrichtung der Austrageinrichtung gegenüber dem Erdboden unabhängig von der Höhe des Auswurfendes der Austrageinrichtung zu steuern. Wird die Austrageinrichtung somit beispielsweise unter Bäumen oder Stromleitungen abgesenkt, wird durch die Steuerung selbsttätig eine Auswurfklappe am Auswurfende derart verstellt, dass die Auswurfrichtung beibehalten wird und das Erntegut sicher das Transportfahrzeug erreicht.

Der Zusammenhang zwischen der Position des ersten Aktors (der z. B. den Drehwinkel um die Hochachse bzw. die Höhe des Austragendes der Austrageinrichtung vorgibt) und der Position des zweiten Aktors (der z. B. zur Höhenverstellung bzw. zur Verstellung der Auswurfklappe dient) kann in einer elektronischen Steuerung fest vorgegeben oder durch den Bediener eingebbar sein, um ihn an die jeweilige Situation anpassen und beispielsweise unterschiedliche Neigungswinkel und Abmessungen der Austrageinrichtung berücksichtigen zu können, die sich auch nachträglich, zum Beispiel bei Umbauten, ändern können. Eine Eingabe kann durch eine Tastatur oder ein oder mehrere Potentiometer erfolgen, mit denen Proportionalitätskonstanten zwischen den beiden Positionen und ein Referenzpunkt eingegeben werden. Auch kann die Eingabe durch sukzessives manuell angesteuertes Anfahren unterschiedlicher Positionen der Austrageinrichtung und entsprechende Bestätigungseingaben in eine Eingabeeinrichtung erfolgen.

Die Verstellung der Position des ersten Aktors erfolgt in der Regel manuell. Sie kann aber auch selbsttätig erfolgen, beispielsweise durch eine Einrichtung zur Erfassung der Position des Transportfahrzeugs, die ein Merkmal des Transportfahrzeugs optisch oder durch mit akustischen oder elektromagnetischen Wellen arbeitenden Abstandssensoren erfasst oder der Informationen über die Position des Transportfahrzeugs und der Erntemaschine zugeführt werden, die beide durch Positionssensoren generiert werden, z. B. durch GPS-Antennen.

In den Zeichnungen sind zwei nachfolgend näher beschriebene Ausführungsbeispiele der Erfindung dargestellt. Es zeigt:
- Fig. 1: eine Erntemaschine in Seitenansicht und in schematischer Darstellung,
- Fig. 2: ein Blockdiagramm einer Steuerung zur Kontrolle der Position der Austrageinrichtung der Erntemaschine,
- Fig. 3: eine Ansicht einer Eingabeeinrichtung,
- Fig. 4: eine Draufsicht auf eine Erntemaschine mit einer zweiten Ausführungsform einer Steuerung zur Kontrolle der Position der Austrageinrichtung der Erntemaschine, und
- Fig. 5: einen Ausschnitt des Blockdiagramms aus Figur 2, enthaltend ein Hydraulikschema für die Ausführungsform aus Figur 4.

Eine in der Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Transportfahrzeug über eine Austrageinrichtung 26 in Form eines drehbaren Austragsschachts. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Die Position der Austrageinrichtung 26 kann durch drei Aktoren 30, 34, 38 verändert werden. Ein Aktor 30 in Form eines in Drehung versetzbaren Hydraulikmotors (alternativ wäre ein Linearmotor verwendbar) dient zur Drehung der an einem Drehkranz 29 um eine etwa vertikale Achse drehbar gelagerten Austrageinrichtung 26. Der Aktor 30 ermöglicht somit, die Austrageinrichtung 26 nach hinten in die in der Figur 1 dargestellte Transportposition zu drehen, oder sie in einen bestimmten Winkel quer zur Fahrtrichtung der Erntemaschine 10 zu verbringen. Die Achse des Drehkranzes 29 ist nicht genau vertikal, sondern gegenüber der Vertikalen bezüglich der Fahrtrichtung nach hinten geneigt. Dadurch vergrößert man den ohne Kollision mit der Fahrerkabine 18 möglichen Drehbereich der Austrageinrichtung 26. Der Aktor 30 greift mit einem Zahn- oder Schneckenrad in ein mit dem Drehkranz drehfest gekoppeltes Zahnrad ein.

Ein Aktor 34 in Form eines Hydraulikzylinders ist eingerichtet, die Austrageinrichtung 26 sich um eine an ihrem stromauf liegenden Ende befindende, horizontale Achse 32 zu verschwenken. Der Aktor 34 definiert somit die Höhe des Austragendes der Austrageinrichtung 26. Ein Aktor 38 in Form eines Hydraulikzylinders oder Linearmotors dient zur Verschwenkung einer Auswurfklappe 36 am Austragende 40 der Austrageinrichtung 26. Die verstellbare Auswurfklappe 36 ermöglicht, den Winkel einzustellen, unter dem das geerntete Gut die Austrageinrichtung 26 verlässt. Die Aktoren 34 und 38 sind einfach oder doppelt wirkende Hydraulikzylinder, wobei bei einfach wirkenden Hydraulikzylindern die Eigengewichte der Austrageinrichtung 26 bzw. der Auswurfklappe 36 oder eine Rückstelleinrichtung, z. B. eine Zugfeder oder eine Gaszugfeder die Rückbewegung ermöglichen. In der dargestellten Ausführungsform sind beide Aktoren 34 und 38 doppelt wirkend. Der Aktor 30 kann die Austrageinrichtung 26 im Uhrzeigersinn und (zeitlich daran anschließend) im Gegenuhrzeigersinn drehen. Die Austrageinrichtung 26 als solche und die Aktoren 30, 34, 38 sind im Stand'der Technik grundsätzlich bekannt, s. beispielsweise EP 1 040 745 A, EP 0 760 202 A und EP 0 672 339 A.

In der Figur 2 ist ein Blockdiagramm wiedergegeben, das den Aufbau einer ersten Ausführungsform einer Einrichtung zur Steuerung der Position der Austrageinrichtung 26 zeigt. Eine Steuerung 50 in Form eines Mikroprozessors oder Mikrocontrollers ist mit einer Eingabeeinrichtung 52 und einer Speichereinrichtung 54 verbunden.

Weiterhin ist die Steuerung mit drei elektromagnetisch gesteuerten Ventilen 56, 58, 60 verbunden, die ihrerseits eingangsseitig hydraulisch mit einer Einrichtung 61 zur Bereitstellung unter Betriebsdruck stehender Hydraulikflüssigkeit (z. B. einem Druckbehälter oder einer Pumpe) und ausgangsseitig mit jeweils einem der Aktoren 30, 34 und 38 in Wirkverbindung stehen. Die Aktoren 30, 34 und 38 sind durch jeweils zwei Hydraulikleitungen mit den Ventilen 56 bzw. 60 verbunden, da der Aktor 30 ein in zwei Drehrichtungen betreibbarer Hydraulikmotor und die Aktoren 34, 38 doppelt wirkende Hydraulikzylinder sind. In dieser Ausführungsform könnte der Aktor 34 auch ein einfach wirkender Zylinder sein.

Schließlich ist die Steuerung 50 mit drei Sensoren 62, 64 und 66 verbunden. Der Sensor 62 erfasst die Position des Aktors 30 zur Drehung der Austrageinrichtung 26, liefert also eine Information über den jeweiligen Schwenkwinkel der Austrageinrichtung 26. Der zweite Sensor 64 erfasst die Position des Aktors 34 zur Höhenverstellung der Austrageinrichtung 26 und stellt eine Information über den Schwenkwinkel der Austrageinrichtung 26 um die horizontale Achse 32 bereit. Der dritte Sensor 66 liefert eine Information über die Stellung des Aktors 38 zum Verschwenken der Auswurfklappe 36, d. h. über den Schwenkwinkel der Auswurfklappe 36. Die in Figur 1 nicht eingezeichneten Sensoren 62, 64, 66 können in das Gehäuse der Aktoren 30, 34, 38 integriert oder an beliebiger, geeigneter Stelle im Abstand von den Aktoren 30, 34, 38 angeordnet sein. Die Sensoren 62, 64 und 66 sind vorzugsweise mit Analog-Digitalwandlern ausgestattet, so dass die Steuerung 50 digitale Daten erhält. Denkbar wäre aber auch, insbesondere über separate Leitungen, der Steuerung 50 von den Sensoren 62, 64 und 66 bereitgestellte analoge Werte zu übersenden.

Die Steuerung 50 ist in der Regel über eine Busleitung, in der Regel in Form eines CAN-Busses, mit der Eingabeeinrichtung 52, den Ventilen 56, 58, 60 und den Sensoren 62, 64 und 66 verbunden, um den Verdrahtungsaufwand zu reduzieren. Die Speichereinrichtung 54 kann monolithisch in die Steuerung 50 integriert oder durch Leitungen mit ihr verbunden sein. Die Speichereinrichtung 54 ist nicht-flüchtig, um zu verhindern, dass die in ihr gespeicherten Daten nach Abschalten der Zündung oder bei Batterieausfall der Erntemaschine 10 verloren gehen. Dazu kann eine Stützbatterie vorgesehen sein, oder es finden statische RAMs Verwendung.

In der Figur 3 ist die Eingabeeinrichtung 52 detaillierter dargestellt. Sie ist in Form eines Multifunktionshandgriffs 72 realisiert, der an der Oberseite eines schwenkbaren Arms 70 angebracht ist. Der Arm 70 ist seitlich neben dem Arbeitsplatz in der Fahrerkabine 18 angeordnet. Durch Verschwenken des Arms 70 um eine horizontale, an seinem unteren Ende quer zur Fahrtrichtung angeordnete Schwenkachse kann in an sich bekannter Weise die Fahrgeschwindigkeit der Erntemaschine 10 vorgegeben werden.

Der Multifunktionshandgriff 72 weist drei Wippschalter 74, 76, 78 auf. Außerdem weist er drei Tastschalter 80, 82, 84 auf. Die Wippschalter 74, 76, 78 und die Tastschalter 80, 82, 84 sind alle elektrisch mit der Steuerung 50 verbunden.

Der erste Wippschalter 74 dient zur Betätigung des zum Drehen der Austrageinrichtung 26 um die Hochachse dienenden Aktors 30. Wird die linke Hälfte des ersten Wippschalters 74 niedergedrückt, wird über die Steuerung 50 und das erste Ventil 56 der Aktor 30 derart mit Hydraulikflüssigkeit beaufschlagt, dass sich die Austrageinrichtung 26 in eine erste Richtung dreht, z. B. im Uhrzeigersinn. Wird analog die rechte Hälfte des ersten Wippschalters 74 niedergedrückt, wird über die Steuerung 50 und das erste Ventil 56 der Aktor 30 derart mit Hydraulikflüssigkeit beaufschlagt, dass sich die Austrageinrichtung in die entgegengesetzte Richtung dreht. Wird der erste Wippschalter 74 nicht betätigt, steht der Aktor 30 still.

Der zweite Wippschalter 76 dient zur Betätigung des zur Höhenverstellung dienenden Aktors 34. Wird die obere Hälfte des zweiten Wippschalters 76 niedergedrückt, wird über die Steuerung 50 und das zweite Ventil 58 der Aktor 34 derart mit Hydraulikflüssigkeit beaufschlagt, dass die Austrageinrichtung in vertikaler Richtung um die Achse 32 nach oben verschwenkt. Wird analog die untere Hälfte des zweiten Wippschalters 76 niedergedrückt, wird über die Steuerung 50 und das zweite Ventil 58 der Aktor 34 von Hydraulikflüssigkeit entleert, so dass sich die Austrageinrichtung 26 in die entgegengesetzte Richtung nach unten absenkt. Wird der zweite Wippschalter 76 nicht betätigt, steht der Aktor 34 still.

Der dritte Wippschalter 78 dient zur Betätigung des Aktors 38 zur Verstellung der Auswurfklappe 36. Wird die obere Hälfte des dritten Wippschalters 78 niedergedrückt, wird über die Steuerung 50 und das dritte Ventil 60 der Aktor 38 derart mit Hydraulikflüssigkeit beaufschlagt, dass die Auswurfklappe 36 nach oben verschwenkt wird. Wird analog die untere Hälfte des dritten Wippschalters 76 niedergedrückt, wird über die Steuerung 50 und das dritte Ventil 60 der Aktor 38 derart mit Hydraulikflüssigkeit beaufschlagt, dass sich die Auswurfklappe 36 in die entgegengesetzte Richtung dreht. Wird der dritte Wippschalter 78 nicht betätigt, steht der Aktor 38 still.

Auf diese Weise ermöglichen die drei Wippschalter 74, 76 und 78, die Austrageinrichtung 26 derart zu positionieren, dass von der Erntemaschine 10 aufgenommenes Gut auf ein Transportfahrzeug gelangt. Aufgrund der nach hinten geneigten Achse des Drehkranzes 29 ändert sich jedoch bei einer Betätigung des Aktors 30 mit dem ersten Wippschalter 74 auch die Höhe des Austragendes 40 der Austrageinrichtung 26, was insbesondere bei seitlich zu befüllenden Transportfahrzeugen nachteilig ist. Um dieses Problem zu lösen, kann durch Betätigen des Tastschalters 80 eine Betriebsart ausgewählt werden, in der der Aktor 34 (der hier als zweiter Aktor wirkt) abhängig von der Position des Aktors 30 (der hier als erster Aktor wirkt) angesteuert wird. Die Anwahl dieser Betriebsart wird vorzugsweise durch eine Leuchtanzeige im Tastschalter 80 bestätigt. Die Ansteuerung des Aktors 34 erfolgt dann durch die Steuerung 50 derart, dass die Höhe des Austragendes 40 konstant bleibt. Dazu sind im Speicher 54 entsprechende Zusammenhänge zwischen dem Winkel des Aktors 30 und der Position des Aktors 34 abgelegt, insbesondere in Form von Tabellen oder funktionalen Zusammenhängen. Die beim Auswählen dieser Betriebsart durch Betätigung des Tastschalters 80 vorhandene Höhe des Austragendes 40 wird jeweils beibehalten. Dadurch kann der Bediener die Austrageinrichtung 26 mittels des Wippschalters 74 zum Drehen veranlassen, ohne dass eine Anpassung der Höhe des Austragendes 40 mit dem Wippschalter 76 erforderlich wäre. Diese Betriebsart könnte auch permanent aktiv sein.

Weiterhin kommen beim Erntebetrieb Situationen vor, in denen der Aktor 34 zu verstellen ist, um die Austrageinrichtung 26 unter Bäumen, Stromleitungen oder anderen überhängenden Gegenständen abzusenken. Damit verändert sich jedoch auch die Auswurfrichtung gegenüber dem Erdboden, so dass nicht immer gewährleistet ist, dass das Erntegut das Transportfahrzeug erreicht. Der Bediener muss daher im Stand der Technik nicht nur den Wippschalter 76 zum Absenken der Austrageinrichtung 26 mittels des Aktors 34 bedienen, sondern auch den Wippschalter 78 betätigen, um die Auswurfklappe 36 anzuheben, so dass etwa dieselbe Auswurfrichtung gegenüber dem Erdboden beibehalten wird. Zur Behebung dieses Nachteils kann mittels des Tastschalters 82 eine zweite Betriebsart ausgewählt werden, in welcher der Aktor 38 (der hier als zweiter Aktor wirkt) in Abhängigkeit von der Position des Aktors 34 (der hier als erster Aktor wirkt) angesteuert wird. Die Anwahl dieser Betriebsart wird vorzugsweise durch eine Leuchtanzeige im Tastschalter 82 bestätigt. Im Speicher 54 ist eine Information abgelegt, wie der Aktor 38 bei einer Änderung der Position des Aktors 34 zu positionieren ist. Dabei kann es sich, wie oben beschrieben, um eine Tabelle oder einen anderen funktionalen Zusammenhang handeln. Die beim Auswählen der zweiten Betriebsart durch den Tastschalter 82 jeweils vorhandene Auswurfrichtung der Austrageinrichtung 26 wird beibehalten. Somit kann der Bediener durch Betätigen des Wippschalters 76 die Höhe des Austragende 40 verändern, ohne dass eine Verstellung der Auswurfklappe 36 mit dem Wippschalter 78 erforderlich wäre. Diese Betriebsart könnte auch permanent aktiv sein.

Beide erwähnten Betriebsarten können durch eine zweite Betätigung der Tastschalter 80 bzw. 82 wieder ausgeschaltet werden. Es können auch beide Betriebsarten gleichzeitig ausgewählt werden, indem beide Tastschalter 80 und 82 betätigt werden. Dann hängt die Position des Aktors 34 von der des Aktors 30 ab, und die des Aktors 38 von der des Aktors 34, die wiederum von der des Aktors 30 abhängt. In allen Betriebsarten können alle Aktoren 30, 34, 38 durch die Wippschalter 74, 76 und 78 verstellt werden, um die Stellung der Austrageinrichtung 26 an sich ändernde Gegebenheiten anzupassen.

Der dritte Tastschalter 84 dient dazu, eine Speicherbetriebsart auszuwählen. In dieser Betriebsart kann der Bediener mittels der Wippschalter 74, 76 und 78 mindestens zwei Stellungen der Austrageinrichtung 26 anfahren, die durch Betätigen des Tastschalters 80 für die erste Betriebsart und des Tastschalters 82 für die zweite Betriebsart bestätigt werden. Durch die Sensoren 62, 64, 66 werden dann die jeweiligen Positionen der Aktoren 30, 34, 38 erfasst und durch die Steuerung 50 werden die Daten im Speicher 54, die zum Ansteuern des Aktors 34 in der ersten Betriebsart und des Aktors 38 in der zweiten Betriebsart dienen, angepasst. Dadurch kann die Steuerung 50 auf einfache Weise an geänderte Bedingungen, wie eine modifizierte Geometrie der Austrageinrichtung 26, angepasst werden.

Die Erntemaschine 10 ist mit einer GPS-Antenne 86 und einer Radioantenne 88 ausgestattet. Mit der GPS-Antenne 86 wird eine Information über die jeweilige Position der Erntemaschine 10 in einem terrestrischen Koordinatensystem generiert. Die Radioantenne 88 dient zum Empfang eines Positionssignals, ebenfalls in einem terrestrischen Koordinatensystem, von einem Transportfahrzeug. Mit den Signalen der Antennen 86, 88 kann ein Signal zur automatischen Ansteuerung der Aktoren 30, 34 und 38 erzeugt werden, so dass das Erntegut selbsttätig auf dem Transportfahrzeug abgelegt wird. Die entsprechende Betriebsart kann durch einen Schalter 90 ausgewählt werden. In dieser Betriebsart wird zumindest die Position des Aktors 30 bei der Ansteuerung des Aktors 34 in der oben beschriebenen Weise berücksichtigt, um der nach hinten geneigten Achse des Drehkranzes 29 Rechnung zu tragen. Auch kann die Position des Aktors 34 bei der Ansteuerung des Aktors 38 Berücksichtigung finden.

In der Figur 4 ist eine Erntemaschine 10 in Form eines Feldhäckslers in Draufsicht dargestellt, bei der eine zweite Ausführungsform einer Einrichtung zur Steuerung der Position der Austrageinrichtung 26 verwirklicht ist. Mit der ersten Ausführungsform übereinstimmende Elemente sind mit übereinstimmenden Bezugszeichen versehen. Bei der Erntemaschine 10 gemäß Figur 4 ist oberhalb des Drehkranzes 29 an der Austrageinrichtung 26 ein exzentrisches Steuerelement 92 angeordnet, das die Austrageinrichtung 26 ringförmig umrundet und mit der Austrageinrichtung 26 mitdreht. Die Mitte des kreiszylindrischen Steuerelements 92 ist gegenüber der um einen kleinen Winkel gegenüber der Vertikalen nach hinten geneigten Drehachse 96 der Austrageinrichtung 26 nach hinten versetzt, d. h. ihr gegenüber exzentrisch angeordnet. In Fahrtrichtung hinter der Drehachse 96 befindet sich ein am Steuerelement anliegendes Folgeelement 98, das mit der Kolbenstange 100 eines Steuerzylinders 94 verbunden ist. Der Steuerzylinder 94 ist am Rahmen 12 der Erntemaschine 10 festgelegt.

Der hydraulische Aufbau der Steuerung zur Kontrolle der Position der Austrageinrichtung 26 ist in der Figur 5 dargestellt. Er entspricht außer der Hinzufügung des Steuerzylinders 94 den entsprechenden Teilen aus Figur 2. Das zweite Ventil 58 ist, wie bei der ersten Ausführungsform, mit einer Steuerung 50 verbunden, wie sie in der Figur 2 dargestellt ist. Die in Figur 5 zur Vereinfachung nicht dargestellten, mit der Anordnung aus Figur 2 identischen Teile der Steuerung 50 ermöglichen ein Verstellen der Aktoren 30 und 38 durch den Bediener über die Wippschalter 74 und 78 und Ventile 56 und 60. Die Steuerung 50 ermöglicht auch ein Verstellen des Aktors 34 über den Wippschalter 76. Beim Verstellen des Aktors 30 entfällt jedoch die oben beschriebene elektronische Ansteuerung des Aktors 34 zum Ausgleich des Neigungswinkels des Drehkranzes 29.

Der Aktor 34 steht mit dem Steuerzylinder 94 in Fluid übertragender Verbindung, wie in der Figur 5 dargestellt. Es sind die Kolbenstangenkammer des Aktors 34 mit der Kolbenstangenkammer des Steuerzylinders 94 und die Zylinderkammer des Steuerzylinders 94 mit der Zylinderkammer des Aktors 34 untereinander direkt verbunden. Wird der Aktor 30 aktiviert, dreht sich das Steuerelement 92 mit der Austrageinrichtung 26 um die Achse 96. Durch die Exzentrizität des Steuerelements 92 bewegt sich auch das Folgeelement 98 in der Fahrtrichtung der Erntemaschine 10 nach vorn, so dass die Kolbenstange 100 des Steuerzylinders 94 entsprechend mitbewegt wird. Je weiter die Austrageinrichtung 26 durch den Aktor 30 aus der in der Figur 4 dargestellten Parkposition nach vorn gedreht wird, umso weiter wird die Kolbenstange 100 des Steuerzylinders 94 nach vorn geschoben. Es wird daher laufend Fluid aus der Kolbenstangenkammer des Steuerzylinders 94 in die Kolbenstangenkammer des Aktors 34 verbracht. Gleichzeitig strömt Fluid aus der Zylinderkammer des Aktors 34 in die Zylinderkammer des Steuerzylinders 94. Die Austrageinrichtung 26 wird durch den Aktor 34 sukzessive abgesenkt, je weiter die Austrageinrichtung 26 nach vorn gedreht wird.

Die Abmessungen des Steuerelements 92, des Steuerzylinders 94 und des Aktors 34 sind derart dimensioniert, dass durch die Bewegung des Aktors 34, die sich beim Drehen der Austrageinrichtung 26 um die Achse 96 ergibt, die Neigung der Achse 96 ausgeglichen wird. Das äußere Ende der Austrageinrichtung 26 bewegt sich im Ergebnis auf einer horizontalen Bahn. Der Tastschalter 80 kann hier entfallen, da der Höhenausgleich aufgrund der hier gewählten hydraulischen Steuerung permanent aktiv ist. Es kann auch auf die Sensoren 62 bis 66 verzichtet werden. Bei einer anderen Ausführungsform könnte das Steuerelement 92 derart geformt sein, dass es nur dann den Steuerzylinder 94 bewegt, wenn er sich auf einer bestimmten Seite, z. B. der linken Seite, der Erntemaschine 10 befindet.
Die Höhenkontrolle findet dann nur statt, wenn sich die Austrageinrichtung 26 auf dieser Seite befindet, die insbesondere der Seite entspricht, von der aus die meisten Ladebehälter zu befüllen sind. Eine analog arbeitende hydraulische Ansteuerung des Aktors 38 basierend auf einem Steuerzylinder, der durch den Aktor 34 bewegt wird, wäre ebenfalls denkbar. Ebenso wäre eine Ansteuerung des Aktors 38 durch den Steuerzylinder 94 möglich, um die Auswurfrichtung anzupassen. Dabei wären dann aber die Zylinderkammern jeweils mit den Kolbenstangenkammern der anderen Zylinder zu verbinden.

Durch die Masse der Austrageinrichtung 26 sind die Zylinderkammern des Aktors 34 und des Steuerzylinders 94 in einem gewissen Maß mit Druck beaufschlagt, so dass das Folgeelement 98 einen Druck auf das Steuerelement 92 ausübt, wodurch sich ein Drehmoment auf die Austrageinrichtung 26 ergibt, zumindest solange die Austrageinrichtung 26 nicht in Fahrtrichtung ausgerichtet ist. Dieser Druck auch dient dazu, das Folgeelement 98 stets in Anlage am Steuerelement 92 zu halten. Zur Entlastung des Aktors 30 kann der Drehkranz 29 in an sich bekannter Weise selbsthemmend sein.

## Patentansprüche (Patentansprüche für folgende(n) Vertragsstaat(en): AT, BG, CH, CY, CZ, DK, EE, ES, FI, GR, HU, IE, IT, LI, LU, MC, NL, PL, PT, RO, SE, SI, SK, TR)

1. Austrageinrichtung (26) einer landwirtschaftlichen Erntemaschine (10), mit einem ersten Aktor (30, 34) und einem zweiten Aktor (34, 38), die mit einer Einrichtung zur Steuerung ihrer Position verbunden und jeweils eingerichtet sind, die Position eines erntegutleitenden Elements der Austrageinrichtung (26) zu verändern, wobei die Einrichtung zur Steuerung der Position der Aktoren (30, 34, 38) eine mit den Aktoren (30, 34, 38) und mit einer Eingabeeinrichtung (52) verbundene Steuerung (50) umfasst und die Position der Austrageinrichtung (26) mittels der Eingabeeinrichtung (52) veränderbar ist, **dadurch gekennzeichnet, dass** die Einrichtung zur Steuerung der Position der Aktoren (30, 34, 38) betreibbar ist, bei einer Verstellung des ersten Aktors (30, 34) die Position des zweiten Aktors (34, 38) abhängig von der Position des ersten Aktors (30, 34) zu ändern.

2. Austrageinrichtung (26) nach Anspruch 1, **dadurch gekennzeichnet, dass** die Einrichtung zur Steuerung der Position der Aktoren (30, 34, 38) betreibbar ist, die Position des zweiten Aktors (34, 38) derart zu ändern, dass eine Auswurfhöhe und/oder Auswurfrichtung des aus der Austrageinrichtung (26) austretenden Ernteguts beibehalten wird.

3. Austrageinrichtung (26) nach Anspruch 2, **dadurch gekennzeichnet, dass** der erste Aktor (30) eine Drehung der Austrageinrichtung (26) um eine etwa vertikal, jedoch geneigt angeordnete Achse bewirkt, und dass der zweite Aktor (34) eine Verstellung der Höhe des Austragendes (40) der Austrageinrichtung (26) bewirkt.

4. Austrageinrichtung (26) nach Anspruch 2 oder 3, **dadurch gekennzeichnet, dass** der erste Aktor (34) eine Verstellung der Höhe des Austragendes (40) der Austrageinrichtung (26) bewirkt, und dass der zweite Aktor (38) eine Verstellung einer am Austragende (40) der Austrageinrichtung (26) angeordneten Auswurfklappe (36) bewirkt.

5. Austrageinrichtung (26) nach einem der Ansprüche 1 bis 4, **dadurch gekennzeichnet, dass** ein Zusammenhang zwischen der Position des ersten Aktors (30, 34) und der Position des zweiten Aktors (34, 38) in einer elektronischen Steuerung (50) fest vorgegeben oder durch einen Benutzer eingebbar ist.

6. Austrageinrichtung (26) nach Anspruch 5, **dadurch gekennzeichnet, dass** der Zusammenhang zwischen der Position des ersten Aktors (30, 34) und der Position des zweiten Aktors (34, 38) durch manuell bewirktes Anfahren verschiedener Positionen der Austrageinrichtung (26) und Abspeichern eingebbar ist.

7. Austrageinrichtung (26) nach einem der Ansprüche 1 bis 6, **dadurch gekennzeichnet, dass** die Position des ersten Aktors (30, 34) in einer elektronischen Steuerung (50) durch eine manuelle Eingabe und/oder selbsttätig änderbar ist.

8. Austrageinrichtung nach einem der Ansprüche 1 bis 4, **dadurch gekennzeichnet, dass** ein Steuerzylinder (94) durch den ersten Aktor (30) bewegbar ist, und dass der Steuerzylinder mit dem zweiten Aktor (34) in hydraulischer Verbindung steht.

9. Erntemaschine (10), insbesondere Feldhäcksler oder Mähdrescher, mit einer Austrageinrichtung (26) nach einem der vorhergehenden Ansprüche.

## Patentansprüche (Patentansprüche für folgende(n) Vertragsstaat(en): BE, DE, FR, GB)

1. Feldhäcksler (10) mit einer Erntegutaufnahmevorrichtung (20), einer Häckseltrommel (22), einer Fördervorrichtung (24), einer zwischen der Häckseltrommel (22) und der Fördervorrichtung (24) angeordneten Nachzerkleinerungsvorrichtung (28) und einer Austrageinrichtung (26), die mit einem ersten Aktor (30, 34) und einem zweiten Aktor (34, 38) versehen ist, wobei die Aktoren (30, 34) mit einer Einrichtung zur Steuerung ihrer Position verbunden und jeweils eingerichtet sind, die Position eines erntegutleitenden Elements der Austrageinrichtung (26) zu verändern, die Einrichtung zur Steuerung der Position der Aktoren (30, 34, 38) eine mit den Aktoren (30, 34, 38) und mit einer Eingabeeinrichtung (52) verbundene Steuerung (50) umfasst und die Position der Austrageinrichtung (26) mittels der Eingabeeinrichtung (52) veränderbar ist, **dadurch gekennzeichnet, dass** die Einrichtung zur Steuerung der Position der Aktoren (30, 34, 38) betreibbar ist, bei einer Verstellung des ersten Aktors (30, 34) die Position des zweiten Aktors (34, 38) abhängig von der Position des ersten Aktors (30, 34) zu ändern.

2. Feldhäcksler (10) nach Anspruch 1, **dadurch gekennzeichnet, dass** die Einrichtung zur Steuerung der Position der Aktoren (30, 34, 38) betreibbar ist, die Position des zweiten Aktors (34, 38) derart zu ändern, dass eine Auswurfhöhe und/oder Auswurfrichtung des aus der Austrageinrichtung (26) austretenden Ernteguts beibehalten wird.

3. Feldhäcksler (10) nach Anspruch 2, **dadurch gekennzeichnet, dass** der erste Aktor (30) eine Drehung der Austrageinrichtung (26) um eine etwa vertikal, jedoch geneigt angeordnete Achse bewirkt, und dass der zweite Aktor (34) eine Verstellung der Höhe des Austragendes (40) der Austrageinrichtung (26) bewirkt.

4. Feldhäcksler (10) nach Anspruch 2 oder 3, **dadurch gekennzeichnet, dass** der erste Aktor (34) eine Verstellung der Höhe des Austragendes (40) der Austrageinrichtung (26) bewirkt, und dass der zweite Aktor (38) eine Verstellung einer am Austragende (40) der Austrageinrichtung (26) angeordneten Auswurfklappe (36) bewirkt.

5. Feldhäcksler (10) nach einem der Ansprüche 1 bis 4, **dadurch gekennzeichnet, dass** ein Zusammenhang zwischen der Position des ersten Aktors (30, 34) und der Position des zweiten Aktors (34, 38) in einer elektronischen Steuerung (50) fest vorgegeben oder durch einen Benutzer eingebbar ist.

6. Feldhäcksler (10) nach Anspruch 5, **dadurch gekennzeichnet, dass** der Zusammenhang zwischen der Position des ersten Aktors (30, 34) und der Position des zweiten Aktors (34, 38) durch manuell bewirktes Anfahren verschiedener Positionen der Austrageinrichtung (26) und Abspeichern eingebbar ist.

7. Feldhäcksler (10) nach einem der Ansprüche 1 bis 6, **dadurch gekennzeichnet, dass** die Position des ersten Aktors (30, 34) in einer elektronischen Steuerung (50) durch eine manuelle Eingabe und/oder selbsttätig änderbar ist.

8. Feldhäcksler (10) nach einem der Ansprüche 1 bis 4, **dadurch gekennzeichnet, dass** ein Steuerzylinder (94) durch den ersten Aktor (30) bewegbar ist, und das der Steuerzylinder mit dem zweiten Aktor (34) in hydraulischer Verbindung steht.

## Claims (Claims for the following Contracting State(s): AT, BG, CH, CY, CZ, DK, EE, ES, FI, GR, HU, IE, IT, LI, LU, MC, NL, PL, PT, RO, SE, SI, SK, TR)

1. Discharging device (26) of an agricultural harvesting machine (10), with a first actuator (30, 34) and a second actuator (34, 38) which are connected to a device for controlling their position and are in each case set up so as to vary the position of a crop-conducting element of the discharging device (26), wherein the device for controlling the position of the actuators (30, 34, 38) comprises a controller (50) connected to the actuators (30, 34, 38) and to an input device (52), and the position of the discharging device (26) can be varied by means of the input device (52), **characterized in that** the device for controlling the position of the actuators (30, 34, 38) can be operated so as, upon adjustment of the first actuator (30, 34), to change the position of the second actuator (34, 38) as a function of the position of the first actuator (30, 34).

2. Discharging device (26) according to Claim 1, **characterized in that** the device for controlling the position of the actuators (30, 34, 38) can be operated so as to change the position of the second actuator (34, 38) in such a manner that an ejection height and/or ejection direction of the crop emerging from the discharging device (26) is maintained.

3. Discharging device (26) according to Claim 2, **characterized in that** the first actuator (30) brings about a rotation of the discharging device (26) about an axis arranged approximately vertically, but at an inclination, and **in that** the second actuator (34) brings about an adjustment of the height of the discharging end (40) of the discharging device (26).

4. Discharging device (26) according to Claim 2 or 3, **characterized in that** the first actuator (34) brings about an adjustment of the height of the discharging end (40) of the discharging device (26), and **in that** the second actuator (38) brings about an adjustment of an ejection flap (36) arranged at the discharging end (40) of the discharging device (26).

5. Discharging device (26) according to one of Claims 1 to 4, **characterized in that** an interrelationship between the position of the first actuator (30, 34) and the position of the second actuator (34, 38) is fixedly predetermined in an electronic controller (50) or can be input by a user.

6. Discharging device (26) according to Claim 5,
**characterized in that** the interrelationship between the position of the first actuator (30, 34) and the position of the second actuator (34, 38) can be input by means of manually implemented moving to different positions of the discharging device (26) and storage thereof.

7. Discharging device (26) according to one of Claims 1 to 6, **characterized in that** the position of the first actuator (30, 34) in an electronic controller (50) can be changed by manual input and/or automatically.

8. Discharging device according to one of Claims 1 to 4, **characterized in that** a control cylinder (94) can be moved by the first actuator (30), and **in that** the control cylinder is hydraulically connected to the second actuator (34).

9. Harvesting machine (10), in particular forage harvester or combine harvester, with a discharging device (26) according to one of the preceding claims.

## Claims (Claims for the following Contracting State(s): BE, DE, FR, GB)

1. Forage harvester (10) with a crop-collecting apparatus (20), a forage chopping cylinder (22), a conveying apparatus (24), a re-chopping apparatus (28) arranged between the forage chopping cylinder (22) and the conveying apparatus (24), and a discharging device (26) which is provided with a first actuator (30, 34) and a second actuator (34, 38), wherein the actuators (30, 34) are connected to a device for controlling their position and are in each case set up so as to vary the position of a crop-conducting element of the discharging device (26), wherein the device for controlling the position of the actuators (30, 34, 38) comprises a controller (50) connected to the actuators (30, 34, 38) and to an input device (52), and the position of the discharging device (26) can be varied by means of the input device (52), **characterized in that** the device for controlling the position of the actuators (30, 34, 38) can be operated so as, upon adjustment of the first actuator (30, 34), to change the position of the second actuator (34, 38) as a function of the position of the first actuator (30, 34).

2. Forage harvester (10) according to Claim 1, **characterized in that** the device for controlling the position of the actuators (30, 34, 38) can be operated so as to change the position of the second actuator (34, 38) in such a manner that an ejection height and/or ejection direction of the crop emerging from the discharging device (26) is maintained.

3. Forage harvester (10) according to Claim 2, **characterized in that** the first actuator (30) brings about a rotation of the discharging device (26) about an axis arranged approximately vertically, but at an inclination, and **in that** the second actuator (34) brings about an adjustment of the height of the discharging end (40) of the discharging device (26).

4. Forage harvester (10) according to Claim 2 or 3, **characterized in that** the first actuator (34) brings about an adjustment of the height of the discharging end (40) of the discharging device (26), and **in that** the second actuator (38) brings about an adjustment of an ejection flap (36) arranged at the discharging end (40) of the discharging device (26).

5. Forage harvester (10) according to one of Claims 1 to 4, **characterized in that** an interrelationship between the position of the first actuator (30, 34) and the position of the second actuator (34, 38) is fixedly predetermined in an electronic controller (50) or can be input by a user.

6. Forage harvester (10) according to Claims 5, **characterized in that** the interrelationship between the position of the first actuator (30, 34) and the position of the second actuator (34, 38) can be input by means of manually implemented moving to different positions of the discharging device (26) and storage thereof.

7. Forage harvester (10) according to one of Claims 1 to 6, **characterized in that** the position of the first actuator (30, 34) in an electronic controller (50) can be changed by manual input and/or automatically.

8. Forage harvester (10) according to one of Claims 1 to 4, **characterized in that** a control cylinder (94) can be moved by the first actuator (30), and **in that** the control cylinder is hydraulically connected to the second actuator (34).

## Revendications (Revendications pour l'(les) Etat(s) contractant(s) suivant(s): AT, BG, CH, CY, CZ, DK, EE, ES, FI, GR, HU, IE, IT, LI, LU, MC, NL, PL, Pt, RO, SE, SI, SK, TR)

1. Dispositif de déchargement (26) d'une machine de récolte agricole (10), comprenant un premier actionneur (30, 34) et un deuxième actionneur (34, 38), qui sont connectés à un dispositif pour commander leur position et qui sont prévus à chaque fois pour modifier la position d'un élément du dispositif de déchargement (26) guidant les plantes récoltées, le dispositif pour commander la position des actionneurs (30, 34, 38) comprenant une commande (50) connectée aux actionneurs (30, 34, 38) et à un dispositif d'entrée (52) et la position du dispositif de déchargement (26) pouvant être modifiée au moyen du dispositif d'entrée (52), **caractérisé en ce que** le dispositif pour commander la position des actionneurs (30, 34, 38) peut être actionné, dans le cas d'un déplacement du premier actionneur (30, 34), pour modifier la position du deuxième actionneur (34, 38) en fonction de la position du premier actionneur (30, 34).

2. Dispositif de déchargement (26) selon la revendication 1, **caractérisé en ce que** le dispositif pour commander la position des actionneurs (30, 34, 38) peut être actionné pour modifier la position du deuxième actionneur (34, 38) de telle sorte qu'une hauteur d'éjection et/ou une direction d'éjection des plantes récoltées sortant du dispositif de déchargement (26) soit respectée.

3. Dispositif de déchargement (26) selon la revendication 2, **caractérisé en ce que** le premier actionneur (30) provoque une rotation du dispositif de déchargement (26) autour d'un axe approximativement vertical mais disposé suivant une certaine inclinaison, et **en ce que** le deuxième actionneur (34) provoque un déplacement de la hauteur de l'extrémité de déchargement (40) du dispositif de déchargement (26).

4. Dispositif de déchargement (26) selon la revendication 2 ou 3, **caractérisé en ce que** le premier actionneur (34) provoque un déplacement de la hauteur de l'extrémité de déchargement (40) du dispositif de déchargement (26), et **en ce que** le deuxième actionneur (38) provoque un déplacement d'un volet de déchargement (36) disposé à l'extrémité de déchargement (40) du dispositif de déchargement (26).

5. Dispositif de déchargement (26) selon l'une quelconque des revendications 1 à 4, **caractérisé en ce qu'**une corrélation entre la position du premier actionneur (30, 34) et la position du deuxième actionneur (34, 38) peut être prédéfinie dans une commande électronique (50) ou peut être entrée par un utilisateur.

6. Dispositif de déchargement (26) selon la revendication 5, **caractérisé en ce que** la corrélation entre la position du premier actionneur (30, 34) et la position du deuxième actionneur (34, 38) peut être entrée par démarrage manuel de différentes positions du dispositif de déchargement (26) et mémorisation.

7. Dispositif de déchargement (26) selon l'une quelconque des revendications 1 à 6, **caractérisé en ce que** la position du premier actionneur (30, 34) peut être modifiée dans une commande électronique (50) par une entrée manuelle et/ou automatiquement.

8. Dispositif de déchargement (26) selon l'une quelconque des revendications 1 à 4, **caractérisé en ce qu'**un cylindre de commande (94) peut être déplacé par le premier actionneur (30) et **en ce que** le cylindre de commande est en liaison hydraulique avec le deuxième actionneur (34).

9. Machine de récolte (10), en particulier faucheuse-hacheuse ou moissonneuse-batteuse, comprenant un dispositif de déchargement (26) selon l'une quelconque des revendications précédentes.

## Revendications (Revendications pour l'(les) Etat(s) contractant(s) suivant(s): BE, DE, FR, GB)

1. Faucheuse-hacheuse (10) comprenant un dispositif de récolte de plantes récoltées (20), un tambour de hachage (22), un dispositif de transport (24), un dispositif de broyage postérieur (28) disposé entre le tambour de hachage (22) et le dispositif de transport (24), et un dispositif de déchargement (26), qui est pourvu d'un premier actionneur (30, 34) et d'un deuxième actionneur (34, 38), les actionneurs (30, 34) étant connectés à un dispositif pour commander leur position et étant prévus à chaque fois pour modifier la position d'un élément du dispositif de déchargement (26) guidant les plantes récoltées, le dispositif pour commander la position des actionneurs (30, 34, 38) comprenant une commande (50) connectée aux actionneurs (30, 34, 38) et à un dispositif d'entrée (52) et la position du dispositif de déchargement (26) pouvant être modifiée au moyen du dispositif d'entrée (52), **caractérisée en ce que** le dispositif pour commander la position des actionneurs (30, 34, 38) peut être actionné, dans le cas d'un déplacement du premier actionneur (30, 34), pour modifier la position du deuxième actionneur (34, 38) en fonction de la position du premier actionneur (30, 34).

2. Faucheuse-hacheuse (10) selon la revendication 1, **caractérisée en ce que** le dispositif pour commander la position des actionneurs (30, 34, 38) peut être actionné pour modifier la position du deuxième actionneur (34, 38) de telle sorte qu'une hauteur d'éjection et/ou une direction d'éjection des plantes récoltées sortant du dispositif de déchargement (26) soit maintenue.

3. Faucheuse-hacheuse (10) selon la revendication 2, **caractérisée en ce que** le premier actionneur (30) provoque une rotation du dispositif de déchargement (26) autour d'un axe approximativement vertical mais disposé suivant une certaine inclinaison, et **en ce que** le deuxième actionneur (34) provoque un déplacement de la hauteur de l'extrémité de déchargement (40) du dispositif de déchargement (26).

4. Faucheuse-hacheuse (10) selon la revendication 2 ou 3, **caractérisée en ce que** le premier actionneur (34) provoque un déplacement de la hauteur de l'extrémité de déchargement (40) du dispositif de déchargement (26), et **en ce que** le deuxième actionneur (38) provoque un déplacement d'un volet de déchargement (36) disposé à l'extrémité de déchargement (40) du dispositif de déchargement (26).

5. Faucheuse-hacheuse (10) selon l'une quelconque des revendications 1 à 4, **caractérisée en ce qu'**une corrélation entre la position du premier actionneur (30, 34) et la position du deuxième actionneur (34, 38) est prédéfinie dans une commande électronique (50) ou peut être entrée par un utilisateur.

6. Faucheuse-hacheuse (10) selon la revendication 5, **caractérisée en ce que** la corrélation entre la position du premier actionneur (30, 34) et la position du deuxième actionneur (34, 38) peut être entrée par démarrage manuel de différentes positions du dispositif de déchargement (26) et mémorisation.

7. Faucheuse-hacheuse (10) selon l'une quelconque des revendications 1 à 6, **caractérisée en ce que** la position du premier actionneur (30, 34) peut être modifiée dans une commande électronique (50) par une entrée manuelle et/ou automatiquement.

8. Faucheuse-hacheuse (10) selon l'une quelconque des revendications 1 à 4, **caractérisée en ce qu'**un cylindre de commande (94) peut être déplacé par le premier actionneur (30) et **en ce que** le cylindre de commande est en liaison hydraulique avec le deuxième actionneur (34).
